# EUROPEAN PATENT SPECIFICATION

(11) **EP 2 236 230 B1**
(45) Date of publication and mention of the grant of the patent: **26.10.2016**
(21) Application number: 10405066.1
(22) Date of filing: 29.03.2010
(51) Int. Cl.: B23B 51/04

(54) **System for making circular holes**
System zum Schneiden von Kreisöffnungen
Système pour découper des trous circulaires

(30) Priority: 30.03.2009 CH 5062009
(43) Date of publication of application: 06.10.2010
(73) Proprietor: Rogantini, Luca, 7608 Castasegna (CH)
(72) Inventor: Rogantini, Luca, 7608 Castasegna (CH)
(74) Representative: Fiammenghi, Eva

(56) References cited:
- WO-A1-99/02292
- US-A- 5 082 403
- US-A1- 2002 131 835

## Description

The present invention relates to a system for making large size circular holes in plasterboard, wood, metal, walls and/or tiles.

Generally, for making large size circular holes in plasterboard, wood, metal, walls and/or tiles hole saws are used; these tools have the form of cup and are formed by a blade cylindrical in shape which is secured to a rotating plate, in turn either pivoted to a pilot twist bit, or directly connected thereto. They are available in different sizes, and in different metals to be used according to the material to be drilled. The hole saws for walls or concrete have a crown of teeth made of hard metals, like the drills of a drill bits which are used to cut: concrete, bricks, hard stones.

This kind of tool is for example used to make circular holes for housing the boxes for receiving light switches and/or outlet.

The Applicant has noted that in conventional systems, after drilling it is difficult to remove from the inside of the hole saw the material removed from the wall that has been drilled. This operation is particularly difficult when, as it often happens, the material consists of a single piece or in any case of a number of large size pieces.

The Applicant has further noted that for removing such slug pieces the user acts with a screwdriver or a different tool provided with an elongate tip in suitable slots formed in the external surface of the hole saw, with a danger to hurt himself and/or to damage the saw or the further tool used.

The documents US5082403, US2002/131835 and WO99/02292 disclose attempts to solve the above problems. US 5 082 403 discloses a system for making circular holes with the features of the preamble of claim 1.

The Applicant has found that with a system provided with an expelling element movable inside the cup the material possibly remained therein can be easily removed, avoiding high construction costs and above all the danger to get hurt or to damage the system itself and/or possible tools used for such purpose.

The invention relates to a system for making circular holes according to claim 1 comprising:
- at least one pilot bit;
- at least one hole saw provided with a circular blade;
- at least one supporting shaft provided with a shank for engaging a chuck;
- at least one element for expelling slug material accumulated inside the hole saw;
- said hole saw being axially slidable with respect to said expelling element (6) between a first position in which the expelling element at least partially projects from the hole saw and an operating position in which it is contained inside the hole saw.

The system is provided with a device for locking the hole saw in the operating position.

The system comprises an actuating device for the axial sliding of the hole saw from the operating position to the first position and vice versa.

The locking device comprises at least one movable stop adapted to get into at least one shaped seat formed on the outer surface of the expelling element.

The actuating device comprises a sleeve, coaxially and slidably mounted on the expelling element, comprising an element for pulling the hole saw from the first position to the operating position and a device for releasing the movable stop from the shaped seat.

Advantageously, the system may comprise a support element for the hole saw coaxially mounted to the expelling element and comprising at least one seat for slidably receiving the movable stop.

Preferably, the system may comprise a support element for the bit comprising a receiving seat for the bit and a device for the connection with the support element of the hole saw for moving the support element for the bit jointly with the support element for the hole saw.

According to an advantageous aspect, the connection device may comprise:
- two diametrically opposite first holes, formed in the support element for the pilot bit;
- two diametrically opposite second holes, formed in the support element for the hole saw; and
- a through pin passing through the first holes and the second holes.

Preferably, the expelling element comprises at least one slide bar for the through pin.

Advantageously, the pulling element may comprise two inner shoulders formed in the sleeve dimensioned and shaped to abut against two corresponding shoulders formed on the outer surface of the support element.

Preferably, the actuating device further comprises at least one second shaped seat positioned at the inner surface of the sleeve and a ramp portion of the first shaped seat.

Advantageously, the ramp portions can diverge towards the shank for making the disengagement of the movable stop element from the shaped seat easier, when the sleeve is moved for bringing the hole saw from the operating position to the first position.

Advantageously, the system may comprise an anti-rotation element of the said pilot bit in the said seat comprising a seat arranged radially with respect to the said bit and dowel slidable in said seat for engaging the outer surface of said bit.

Preferably, the system may comprise at least one quick coupling device of the hole saw to the support element for the hole saw.

The quick coupling device suitably comprises at least one shaped pin and at least one counter-shaped seat for the shaped pin. The shaped pin is configured to removably engage the counter-shaped seat for connecting the hole saw with the support element of the hole saw.

Preferably, the quick coupling device comprises at least one safety element for preventing the disengagement of the shaped pin from the counter-shaped seat.

For making maintenance of the device easier and allowing easy intervention in the event of failure, the sleeve is formed by two removably coupled half-shells.

Further features and advantages of the invention shall become clearer from the detailed description of some preferred but not exclusive embodiments of a system for making circular holes, according to the present invention.

Such a description shall be presented hereafter with reference to the accompanying drawings, provided only for indicating, and thus non-limiting, purposes, wherein:
- figure 1 is a schematic lateral view of a first embodiment of the system according to the present invention with the hole saw in the first position, in which the expelling element projects with respect to the hole saw;
- figure 2 is a schematic lateral view of a first embodiment of the system according to the present invention during the movement of the hole saw from the first position shown in figure 1 to the operating position;
- figure 3 is a schematic lateral view of a first embodiment of the system according to the present invention with the hole saw in the operating position;
- figure 4 is a schematic exploded view of a portion of a first embodiment of the system according to the present invention;
- figure 5 is a schematic lateral view of a second embodiment of the system according the present invention with the hole saw in the operating position and the shaped pin kept in place by the safety element;
- figure 6 is a schematic lateral view of a second embodiment of the system according to the present invention with the hole saw in the operating position and the shaped pin not kept in place by the safety element;
- figure 7 is a schematic view of a sleeve of a second embodiment of the system according to the present invention.

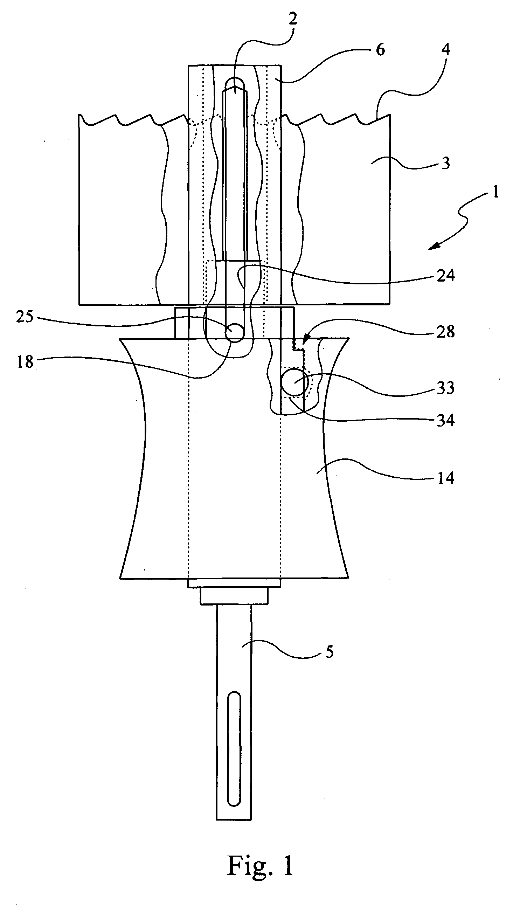

Referring to figures 1-3, a system 1 according to the present invention for making large size circular holes in plasterboard, wood, metal, walls and/or tiles is indicated with reference numeral 1.

The system 1 comprises at least one hole saw 3 provided with a circular blade 4 and at least one pilot bit 2, coaxially mounted to the hole saw 3.

The system 1 is mounted on a supporting shaft provided with a shank 5 shaped and dimensioned for engaging the chuck of a drill and making the circular blade 4 of the hole saw 3 and the pilot bit 2 to rotate.

According to a relevant aspect of the present invention, the system 1 comprises at least one element 6 for expelling slug material accumulated inside the hole saw 3, after the drilling.

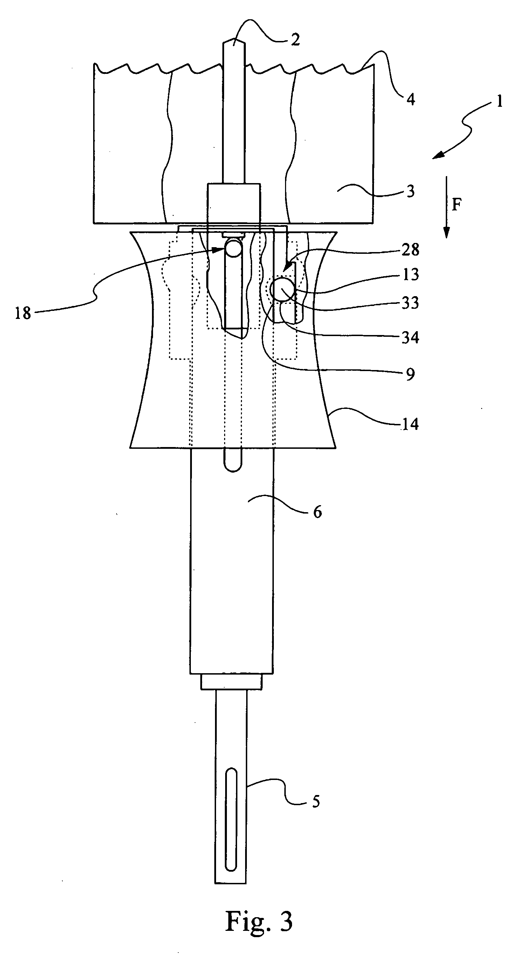

The hole saw 3 is axially slidable with respect to the expelling element 6 between a first position (shown in figure 1) in which the expelling element 6 at least partially projects from the hole saw 3, particularly from the circular blade 4, and an operating position (shown in figure 3) in which it is contained inside the hole saw 3.

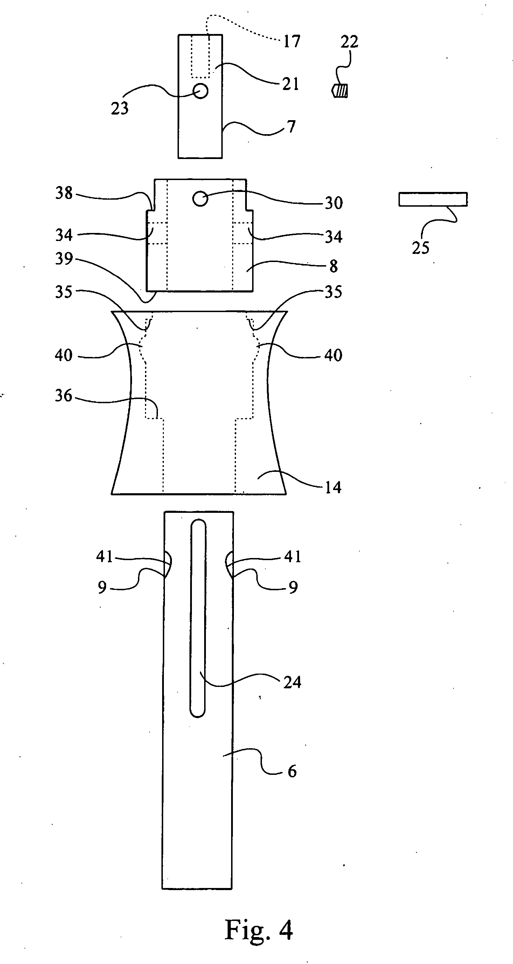

To this end, the hole saw 3 is associated with a support element 8 in the form of a hollow cylindrical body circumferentially located about the expelling element 6, see figure 4.

The support element 8 for the hole saw 3 is axially slidable on the expelling element 6, the axial sliding of the support element 8 causing the axial sliding of the hole saw 3 with respect to and on the expelling element 6.

The pilot bit 2 can slide, integrally with the hole saw 3, on the expelling element 6.

To this end, the support element 8 for the hole saw 3 is made integral with a support element 7 for the pilot bit 2.

The support element 7 for the pilot bit 2 is in the form of a cylindrical body coaxially arranged inside the expelling element 6 and the support element 8 for the said hole saw 3, see figure 4.

The support element 7 for the said pilot bit 2 comprises at an upper end thereof a receiving seat 17 for the pilot bit 2 and, preferably, an anti-rotation element of the pilot bit in the receiving seat 17.

According to a preferred aspect, the anti-rotation element is formed by a threaded seat 21 arranged radially with respect to the pilot bit 2 and a threaded dowel 22 slidable in the seat 21 for engaging the outer surface of the pilot bit 2.

In order to make the support element 8 for the hole saw 3 integral with the support element 7 for the pilot bit 2 the system is provided with a connection device.

The connection device comprises a through pin 25 passing through two diametrically opposite first through holes 23, formed in the support element 7 for the pilot bit 2, and two diametrically opposite second through holes 30, formed, at a corresponding position, in the support element 8 for the hole saw 3.

The insertion of the through pin 25 in the first through holes 23 and the second through holes 30 removably couples the hole saw 3 and the support element 8.

In this way, thus, the support element 8 for the hole saw and the support element 7 for the pilot bit 2 slide integrally with each other with respect to the expelling element 6.

Accordingly, the hole saw 3 and the pilot bit 2 slide integrally with each other with respect to the expelling element 6.

The expelling element 6 comprises two diametrically opposite slide bars 24 for the pin 25, the slide bars 24 are formed on the outer surface of the expelling element and longitudinally extend on the expelling element 6.

When the hole saw 3 is operating, or it is ready for operation, the hole saw 3 is in the said second position, in which as shown in figure 3 the expelling element 6 is contained inside the hole saw 3.

A device 28 for locking the hole saw 3 in the operating position is specifically provided for keeping the expelling element inside the hole saw 3 during the operation.

The locking device 28 comprises at least one movable stop 13 adapted to engage at least a portion of a shaped seat 9, formed on the outer surface of said expelling element 6, so as to prevent the sliding of the hole saw 3 with respect to the expelling element 6.

Preferably, as a movable stop 13 two balls 33 are provided, each movable, radially with respect to the expelling element 6, within a radial seat 34 formed in the support element for the hole saw 3.

In detail, as shown in figure 3, in order to keep the expelling element 6 inside the hole saw 3 during operation, the balls 33 are thrust into engagement with the shaped seats 9, thus preventing the axial sliding of the support element of the hole saw 3 on the expelling element 6.

The balls 33 are thrust into engagement with the shaped seats 9 by the radially inner surface of a sleeve 14. The sleeve 14 is coaxially and slidably mounted on the expelling element 6 and the support element 8 of the hole saw 3. The balls 33 have a diameter larger than the radial dimension of the seat 34.

The sleeve 14 comprises an element for pulling the hole saw 3 from the first position, shown in figure 1, to the operating position, shown in figure 3, and vice versa and a device for releasing the movable stop 13 from the said shaped seat 9.

The pulling element is represented by two inner shoulders 36 and 35 dimensioned and shaped to abut against two corresponding shoulders 38 and 39 formed on the outer surface of the support element 8.

In the operating position the shoulder 35 does not contact the shoulder 38, but is spaced apart from the latter in the axial direction.

For the purpose of the present invention the axial direction is defined by the direction of extension of the expelling element, i. e. the vertical direction of the expelling element referring to the figures. Accordingly, in the first position when the expelling element 6 is at the end of its stroke and is extracted from the hole saw 3 as shown in figure 1, the shoulder 39 does not contact the shoulder 36, being spaced apart from the latter in the axial direction.

For allowing the sliding of the hole saw 3, an actuating device for the axial sliding of the said hole saw 3 from the operating position, shown in figure 3, to said first position, shown in figure 1, is provided on the expelling element 6.

The actuating device comprises a sleeve 14 and at least a second shaped seat 40, preferably annular, positioned at the inner surface of the sleeve 14 and a ramp portion 41 of the shaped seat 9.

The ramp portions 41 advantageously diverge towards the shank 5, so as to make the disengagement of the balls 33 from the shaped seat 9 easier, when the sleeve 14 is moved by the user towards the shank 5 for bringing the hole saw 3 from the operating position to the first position.

The second shaped seat 40 has a curvilinear profile and is shaped for receiving the said movable stop 13 and disengage it form the first shaped seat 9. The second shaped seat 40 is spaced apart from the shoulder 35 so that when the shoulder 35 contacts the shoulder 38 the shaped seat 40 is in contact with the balls 33.

Some steps of the operation of the system 1 according to the present invention shall now be briefly described in detail.

During operation of the hole saw 3 or immediately before using it, the hole saw 3, as shown in figure 3, is in an operating position, the expelling element 6 is thus contained inside the hole saw 3.

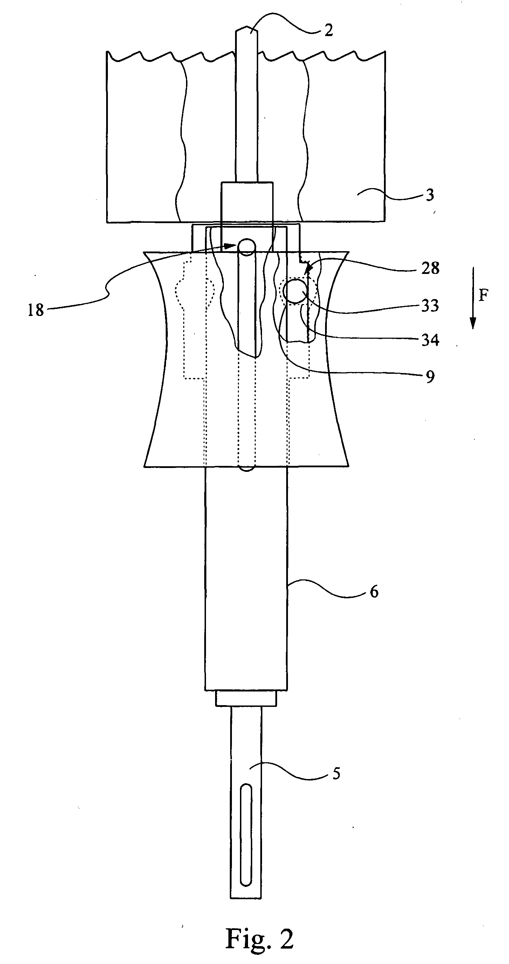

Once the drilling of the wall in case has been carried out or even when the user wants to remove slug material from the inside of the hole saw 3, the user has to pull the sleeve 14 downwards as indicated by arrow F in figure 2.

The manual sliding of the sleeve 14 downwards makes the shoulder 35 to abut against the shoulder 38 and brings the seat 40 at the location where the ball 33 are. The further sliding of the sleeve 14 downwards tends to lower the support element 8 of the hole saw 3 with respect to the expelling element 6. Under the action of the support element 8 and of the ramp portion 41, the balls 33 are disengaged from the first shaped seats 9, thanks to free space provided by the second shaped seat 40 and are partially housed in the said second seat 40.

At this point, the support element 8 of the hole saw 3, the support element 7 of the pilot bit 2 and, accordingly, the hole saw 3 and the pilot bit 2 slide downwards with respect to the expelling element 6, which tends to come out from the hole saw 3 thrusting the slug material out of the hole saw 3.

The stroke of the support element 8 and, accordingly, of the hole saw 3 continues till the abutment of the shoulder 39 against the shoulder 36 occurs, in this condition the hole saw 3 is in a first position with respect to the expelling element 6, in which said expelling element 6 at least partially projects with respect to the hole saw 3, as shown in figure 1.

In this position, at least part of the slug material is removed from the hole saw 3, thus increasing the free space inside the same and allowing easy extraction of the remaining material.

For bringing the hole saw 3 back in the operating position it is enough to act in the opposite direction, pushing the sleeve 14 upwards.

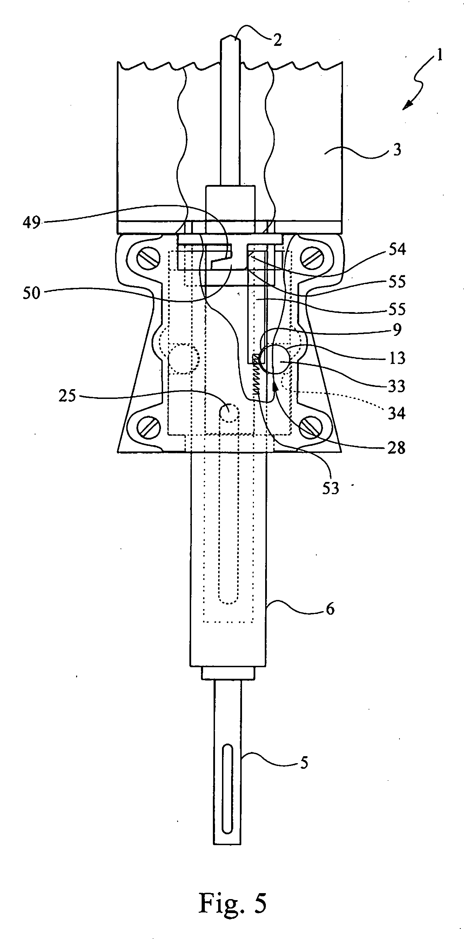

In figures 5-7 a second embodiment of the present invention is shown, which fully corresponds to that shown in figures 1-4 except in that it is provided with a quick coupling device of the hole saw 3 to the said support element 8 and an openable sleeve 14.

In figures 5-7 the elements of the system according to the present invention which are substantially the same as those shown in figures 1-4 are indicated with the same reference numerals.

As mentioned above, in the embodiment shown in figures 5-7, the system 1 may comprise at least one quick coupling device of the hole saw 3 to the support element 8 for the hole saw.

The quick coupling device comprises at least one shaped pin 50, preferably two of them, connected with the hole saw 3 and at least one counter-shaped seat 49, preferably two of them, formed in the support element 8 for the hole saw.

The shaped pins 50 are located diametrically opposite to each other on the outer surface of the hole saw 3 and have the form of a hook or overturned "L".

The shaped pins 50 are adapted to removably engage the counter-shaped seats 49, formed at corresponding positions on the support element 8 for the hole saw.

In detail, the counter-shaped seats 49 are formed in diametrically opposite positions at the upper edge of the support element 8 and have substantially the same shape of the two shaped pins 50, but a slightly larger dimension.

The counter-shaped seats 49 are defined by two grooves formed at the upper edge of the support element and by two safety elements adapted to prevent the disengagement of the shaped pin 50 from the counter-shaped seat 49.

Each of the safety element has a vertical pin 52 housed in a vertical seat 51 of the support element 8 and a spring 53, preferably helical, adapted to act on the vertical pin 52 so as to thrust it at least partially out of the vertical seat 51 and make it to abut against the shaped pin 50.

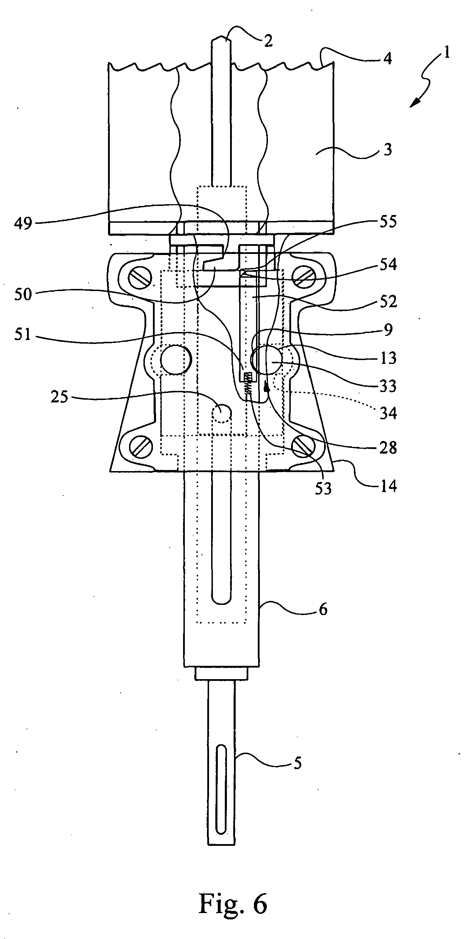

The vertical pin 52 is movable between a locking position, shown in figure 5, in which it protrudes at least partially from the vertical seat 51 and has a portion of a lateral wall abutting against the shaped pin 50, so as to prevent any angular movement that could cause the disengagement of the shaped pin 50 from the counter-shaped seat 49, and a release position, shown in figure 6, in which only a small portion of the vertical pin 52 prevents the angular rotation of the shaped pin 50.

The small portion of vertical pin 52 which prevents angular rotation of the shaped pin 50 is formed at the free end of the vertical pin 52, i. e. the free end opposite the spring 53, and has a bevel 54 adapted to cooperate with a corresponding bevel 55 formed on the shaped pin 50.

In this position, a small angular rotation of the hole saw 3, caused by the user, makes the bevel 54 to abut against the bevel 55, overcoming the force of the spring 53, thus lowering the vertical pin 52 and allowing the disengagement of the shaped pin 50 from the counter-shaped pin 49.

For making maintenance of the device easier and allowing easy intervention in the event of failure, the sleeve 14 is formed by two removably coupled half-shells 14';14".

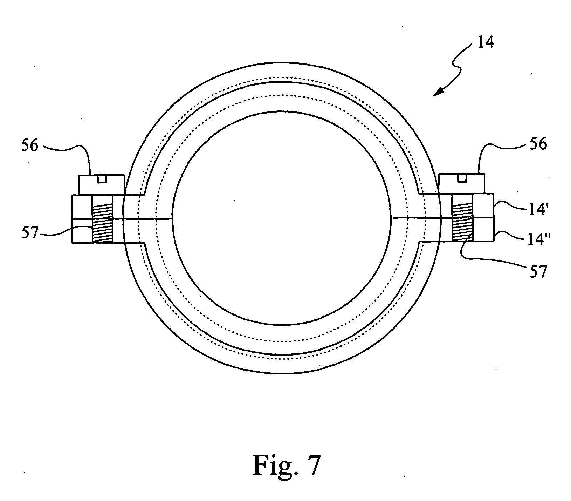

In the embodiment shown in figure 7, the two half-shells 14';14" are coupled by means of known fastening means such as screws 56 engaged in suitable threaded holes 57, but different fastening means can be used without departing from the scope of protection of the present invention.

The present invention has been described with reference to some embodiments thereof. Many modifications can be introduced in the embodiments described in detail, falling anyhow within the scope of protection of the invention, which is defined by the following claims.

## Claims

1. System (1) for making circular holes comprising:
- at least one pilot bit (2);
- at least one hole saw (3) provided with a circular blade (4);
- at least one supporting shaft provided with a shank (5) for engaging the chuck of a drill;
- at least one element (6) for expelling slug material accumulated inside the hole saw (3);
- said hole saw being axially slidable with respect to said expelling element (6) between a first position in which said expelling element (6) at least partially projects from the hole saw (3) and an operating position in which it is contained inside the hole saw (3);
- an actuating device for the axial sliding of the said hole saw (3) from said operating position to said first position and vice versa;
- a device (28) for locking the said hole saw (3) in said operating position; said device (28) for locking comprises at least one movable stop (13) adapted to get into at least one first shaped seat (9) formed on the outer surface of said expelling element (6);
**characterised in that**:
.-said actuating device comprises a sleeve (14), coaxially and slidably mounted on said expelling element (6) comprising an element for pulling the said hole saw (3) from the said first position to the said operating position and a device for releasing the said movable stop (13) from the said shaped seat (9).

2. System according to claim 1, **characterized by** comprising a support element (8) for the said hole saw (3) coaxially mounted to the said expelling element (6) and comprising at least one seat (34) for slidably receiving said movable stop (13).

3. System according to anyone of the previous claims, **characterized by** comprising a support element (7) for the said pilot bit (2) comprising a receiving seat (17) for the said pilot bit (2) and a device for the connection with the support element (8) of the said hole saw (3) for moving the said support element (7) for the said pilot bit (2) jointly with the said support element (8) for the said hole saw (3).

4. System according to claim 3, **characterized in that** the connection device (18) comprises:
- two diametrically opposite first holes (23) formed in the support element (7) for the pilot bit (2);
- two diametrically opposite second holes (30), formed in the support element (8) for the hole saw (3); and
- a through pin (25) passing through the first holes (23) and the second holes (30).

5. System according to claim 4, **characterized in that** said expelling element (6) comprises at least one slide bar (24) for the said through pin (25).

6. System according to anyone of the previous claims 1 to 5, **characterized in that** the said pulling element comprises two inner shoulders (36;35) formed in the sleeve (14) dimensioned and shaped to abut against two corresponding shoulders (38;39) formed on the outer surface of the support element (8).

7. System according to anyone of the previous claims 1 to 6, **characterized in that** the actuating device further comprises at least one second shaped seat (40) positioned at the inner surface of the sleeve (14) and a ramp portion (41) of the first shaped seat (9).

8. System according to claim 7, **characterized in that** the ramp portions (41) diverge towards the said shank (5) for making the disengagement of the movable stop element (13) from the shaped seat (9) easier, when the sleeve (14) is moved for bringing the said hole saw (3) from the operating position to the first position.

9. System according to anyone of the previous claims, **characterized by** comprising at least one quick coupling device of the said hole saw (3) to the said support element (8).

10. System according to claim 9, **characterized in that** said quick coupling device comprises at least one shaped pin (50) and at least one counter-shaped seat (49) for the said shaped pin (50), said at least one shaped pin (50) being configured to removably engage said counter-shaped seat (49) for connecting the said hole saw (3) with the said support element.

11. System according to claim 10 **characterized in that** said quick coupling device comprises at least one safety element for preventing the disengagement of the said at least one shaped pin (50) from the said at least one counter-shaped seat (49).

## Patentansprüche

1. System (1) zum Schneiden von Kreisöffnungen mit:
- mindestens einer Pilotkrone (2);
- mindestens einer Lochsäge (3), die mit einem Kreismesser (4) versehen ist;
- mindestens einer Tragwelle, die mit einem Schaft (5) für den Eingriff des Bohrfutters versehen ist;
- mindestens einem Element (6) für die Entfernung von Stangenmaterial kumuliert in der Lochsäge (3);
- die Lochsäge ist axial schiebbar bezüglich des Entfernungselements (6) zwischen der ersten Position worin das Entfernungselement (6) zumindest teilweise vorspringt aus der Lochsäge (3) und einer Arbeitsposition worin es in der Lochsäge (3) enthalten ist;
- einer Betätigungsvorrichtung für das axialen Gleiten von der Lochsäge (3) ab dieser Arbeitsposition zu dieser ersten Position und umgekehrt;
- eine Vorrichtung (28) zum Locken diese Lochsäge (3) in dieser Arbeitsposition; die Vorrichtung (28) zum Locken enthält mindestens einen beweglichen Anschlag (13) geeignet für das Eintritt in einer ersten förmigen Sitzfläche (9) gebildet über die äußeren Oberfläche des Entfernungselements (6);
**dadurch gekennzeichnet, dass**
- die Betätigungsvorrichtung enthält eine Hülse (14), die koaxial und verschieblich angebracht an dem Entfernungselement (6) ist, mit einem Element für das Ziehen von der Lochsäge (3) ab dieser ersten Position zu dieser Arbeitsposition und eine Vorrichtung für die Freigabe des beweglichen Anschlags (13) aus der förmigen Sitzfläche (9).

2. System nach Anspruch 1, **dadurch gekennzeichnet, dass** es enthält ein Stützelement (8) für die Lochsäge (3) koaxial gebildet über dem Entfernungselement (6) und enthält mindestens eine Sitzfläche (34) für den verschiebbar Empfang des beweglichen Anschlags (13).

3. System nach einem der vorhergehenden Ansprüche, **dadurch gekennzeichnet, dass** es enthält ein Stützelement (7) für die Pilotkrone (2) mit einer Empfangssitzfläche (17) für die Pilotkrone (2) und eine Vorrichtung für die Verbindung mit dem Stützelement (8) der Lochsäge (3) für die Bewegung des Stützelements (7) für die Pilotkrone (2) zusammen mit dem Stützelement (8) für die Lochsäge (3).

4. System nach Anspruch 3, **dadurch gekennzeichnet, dass** die Verbindungsvorrichtung (18) enthält :
- zwei diametral entgegengesetzte erste Löcher (23) gebildet im Stützelement (7) für die Pilotkrone (2);
- zwei diametral entgegengesetzte zweite Löcher (30) gebildet im Stützelement (8) für die Lochsäge (3); und
- einen Achsstift (25), der geht durch die ersten Löcher (23) und die zweiten Löcher (30).

5. System nach Anspruch 4, **dadurch gekennzeichnet, dass** der Entfernungselement (6) enthält mindestens eine Gleitschiene (24) für den Achsstift (25).

6. System nach einem der vorhergehenden Ansprüche 1 bis 5, **dadurch gekennzeichnet, dass** das Ziehelement enthält zwei innere Schultern (36; 35) gebildete in einer Hülse (14), dimensionierte und geformte um zu lehnen an den zwei entsprechenden Schultern (38; 39) gebildete über die äußere Oberfläche des Stützelements (8).

7. System nach einem der vorhergehenden Ansprüche 1 bis 6, **dadurch gekennzeichnet, dass** die Betätigungseinrichtung enthält auch mindestens eine zweite förmige Sitzflache (40) gebildet über die innere Oberfläche der Hülse (14) und einen Rampenabschnitt (41) der ersten förmigen Sitzfläche (9).

8. System nach Anspruch 7, **dadurch gekennzeichnet, dass** die Rampenabschnitte (41) divergieren gegen dem Schaft (5) um zu erleichtern die Auslösung des beweglichen Anschlags (13) ab der förmigen Sitzfläche (9), wenn die Hülse (14) wird bewegt um die Lochsäge (3) ab der Arbeitsposition zu der ersten Position zu bringen.

9. System nach einem der vorhergehenden Ansprüche, **dadurch gekennzeichnet, dass** es enthält mindestens eine Schnellkupplungsvorrichtung dieser Lochsäge (3) mit dem Stützelement (8).

10. System nach Anspruch 9, **dadurch gekennzeichnet, dass** die Schnellkupplungsvorrichtung enthält einen förmigen Achsstift (50) und mindestens eine gegengeformte Sitzfläche (49) für den förmigen Achsstift (50) und der förmige Achsstift (50) ist konfiguriert um die gegengeformte Sitzfläche (49) abnehmbar zu angreifen für die Verbindung der Lochsäge (3) mit dem Stützelement.

11. System nach Anspruch 10, **dadurch gekennzeichnet, dass** die Schnellkupplungsvorrichtung enthält mindestens ein Sicherheitselement für die Vermeidung der Auslösung von dem mindestens einen förmigen Achsstift (50) aus der mindestens einer gegengeformten Sitzfläche (49).

## Revendications

1. Système (1) pour découper des trous circulaires comprenant :
- au moins un trépan pilote (2);
- au moins une scie cloche (3) fourni avec une scie circulaire (4);
- au moins un arbre de support fourni avec une tige (5) pour engager le mandrin d'une perceuse;
- au moins un élément (6) pour expulser matériel métallique accumulé dans la scie cloche (3);
- cette scie cloche étant axialement coulissante par rapport à cet élément d'expulsion (6) entre une première position dans laquelle cet élément d'expulsion (6) au moins partiellement se projet de la scie cloche (3) et une position opérationnelle dans laquelle il est contenu dans la scie cloche (3);
- un dispositif d'actionnement pour le glissement axial de ladite scie cloche (3) de dite position opérationnelle à dite première position et vice versa;
- un dispositif (28) pour bloquer dite scie cloche (3) sur ladite position opérationnelle ; ce dispositif (28) pour le blocage comprend au moins un arrêt mobile (13) adapté pour entrer dans au moins un premier siège modelé (9) formé sur la surface extérieure de ce élément d'expulsion (6);
**Caractérisé en ce que**:
- ce dispositif d'activation comprend un manchon (14), monté de façon coaxiale et de façon coulissante sur dit élément d'expulsion (6) comprenant un élément pour tirer ladite scie cloche (3) de dite première position vers dite position opérationnelle et un dispositif pour libérer dit arrêt mobile (13) de dit siège modelé (9).

2. Système selon la revendication 1, **caractérisé en ce qu'**il comprend un élément de support (8) pour dite scie cloche (3) monté de façon coaxiale sur cet élément d'expulsion (6) et comprenant au moins un siège (34) pour recevoir de façon coulissante dit arrêt mobile (13).

3. Système selon l'une quelconque des revendications précédentes, **caractérisé en ce qu'**il comprends un élément de support (7) pour dit trépan pilote (2) comprenant un siège de réception (17) pour ce trépan pilote (2) et un dispositif pour la connexion avec l'élément de support (8) de cette scie cloche (3) pour déplacer cet élément de support (7) pour dit trépan pilote (2) conjointement avec cet élément de support (8) pour dite scie cloche (3).

4. Système selon la revendication 3, **caractérisé en ce que** le dispositif de connexion (18) comprend :
- deux premiers trous (23) diamétralement opposés formés dans l'élément de support (7) pour le trépan pilote (2) ;
- deux deuxièmes trous (30) diamétralement opposés, formés dans l'élément de support (8) pour la scie cloche (3) ; et
- un boulon traversant (25) passant à travers les premiers trous (23) et les deuxièmes trous (30).

5. Système selon la revendication 4, **caractérisé en ce que** cet élément d'expulsion (6) comprend au moins une barre à glissière (24) pour dit boulon traversant (25).

6. Système selon l'une quelconque des revendications précédentes de 1 à 5, **caractérisé en ce que** l'élément de traction comprend deux épaules intérieures (36 ; 35) formées dans le manchon (14) dimensionnées et conçues pour s'appuyer contre les deux épaules correspondantes (38 ; 39) formées sur la surface extérieure de l'élément de support (8).

7. Système selon l'une quelconque des revendications précédentes de 1 à 6, **caractérisé en ce que** le dispositif d'activation comprend aussi au moins un deuxième siège modelé (40) positionné sur la surface intérieure du manchon (14) et une portion de rampe (41) du premier siège modelé (9).

8. Système selon la revendication 7, **caractérisé en ce que** les portions de rampe (41) divergent vers la tige (5) pour rendre plus facile le désengagement de l'élément d'arrêt mobile (13) depuis le siège modelé (9), lorsque le manchon (14) est déplacé pour porter cette scie cloche (3) depuis la position opérationnelle à la première position.

9. Système selon l'une quelconque des revendications précédentes, **caractérisé en ce qu'**il comprend au moins un dispositif de connexion rapide de cette scie cloche (3) vers cet élément de support (8).

10. Système selon la revendication 9, **caractérisé en ce que** ce dispositif de connexion rapide comprend au moins un boulon modelé (50) et au moins un siège modelé de contre-forme (49) pour dit boulon modelé (50), dit boulon modelé (50) étant configuré pour engager de façon amovible dit siège modelé de contre-forme (49) pour connecter ladite scie cloche (3) avec dit élément de support.

11. Système selon la revendication 10, **caractérisé en ce que** ledit dispositif de connexion rapide comprend au moins un élément de sécurité pour éviter le désengagement de dit un boulon modelé (50) depuis dit siège modelé de contre-forme (49).
